Europäisches Patentamt

European Patent Office

Office européen des brevets

(19)

(11) Numéro de publication : **0 356 289 B1**

(12) ## FASCICULE DE BREVET EUROPEEN

(45) Date de publication du fascicule du brevet :
**30.09.92 Bulletin 92/40**

(51) Int. Cl.[5] : **H01S 3/06,** H01S 3/03,
H01S 3/041

(21) Numéro de dépôt : **89402197.1**

(22) Date de dépôt : **02.08.89**

(54) **Appareil pour délivrer un faisceau laser.**

(30) Priorité : **04.08.88 FR 8810520**

(43) Date de publication de la demande :
**28.02.90 Bulletin 90/09**

(45) Mention de la délivrance du brevet :
**30.09.92 Bulletin 92/40**

(84) Etats contractants désignés :
**AT BE CH DE ES FR GB GR IT LI LU NL SE**

(56) Documents cités :
**EP-A- 0 301 526**
**FR-A- 1 356 934**
**FR-A- 1 361 121**
**FR-A- 2 119 825**
**US-A- 3 516 001**
**US-A- 4 740 983**
**PHYSICS LETTERS, vol. 58A, no. 3, 23 août
1976, pages 183-184; E. AFFOLTER et al.:
"Oversized helical waveguides foroptically
pumped far-infrared lasers"**
**SOVIET JOURNAL OF QUANTUM ELECTRO-
NICS, vol. 1, no. 4, janvier-février 1972, page
369-375; E.I. KAMENSKII et al.: "Lasers
withpolyhedral energy guides"**

(73) Titulaire : **L'AIR LIQUIDE, SOCIETE ANONYME
POUR L'ETUDE ET L'EXPLOITATION DES
PROCEDES GEORGES CLAUDE**
**75, Quai d'Orsay**
**F-75321 Paris Cédex 07 (FR)**
(84) **ES GR IT SE**
Titulaire : **LA SOUDURE AUTOGENE
FRANCAISE**
**75, Quai d'Orsay**
**F-75007 Paris (FR)**
(84) **BE CH DE FR GB LI LU NL AT**

(72) Inventeur : **Landry, Jacques**
**18, Chemin Dupuis Vert**
**F-95000 Cergy (FR)**
Inventeur : **Van der Have, Philippe Liquid Air
(PTY) Limited**
**1st Floor 9, Wellington Road Parktow
Z-99300 2193 Johannesburg (ZA)**
Inventeur : **Poncon, Vincent**
**2652 Ewing Avenue**
**Evanston Illinois 62201 (US)**

(74) Mandataire : **Le Moenner, Gabriel et al
L'AIR LIQUIDE 75, Quai d'Orsay**
**F-75321 Paris Cédex 07 (FR)**

EP 0 356 289 B1

## Description

La présente invention est relative à un appareil pour délivrer un faisceau laser, du type comprenant un milieu gazeux d'amplification et des moyens d'excitation de ce milieu. Elle s'applique aussi bien à la réalisation de lasers qu'à celle d'amplificateurs de faisceau laser.

La technologie courante de ces appareils consiste à disposer dans une cavité sous vide où circule un gaz lasant raréfié, un certain nombre de miroirs dont l'un est partiellement réfléchissant, qui définissent un trajet du faisceau lumineux constitué de segments rectilignes et dont la longueur est très supérieure à celle de l'appareil.

Cette technologie présente l'inconvénient d'être complexe et de se dérégler facilement du fait du transport, des chocs et/ou de l'échauffement. De plus, l'encombrement des appareils est important dès qu'une certaine puissance de sortie est requise.

L'invention a pour but de fournir un appareil fiable de dimensions réduites.

A cet effet, l'invention a pour objet un appareil du type précité, caractérisé en ce que le milieu d'amplification est délimité par un guide réfléchissant qui définit un trajet continûment courbe de guidage du faisceau laser, ce faisceau laser suivant une pluralité de spires.

Le guide peut notamment être constitué par une gorge creusée dans un bloc support rigide et présenter une section droite concave.

Ledit trajet de guidage peut en particulier être hélicoïdal.

Quelques exemples de réalisation de l'invention vont maintenant être décrits en regard des dessins annexés, sur lesquels :

– la figure 1 est une vue latérale, partiellement en coupe, d'un appareil d'amplification de faisceau laser conforme à l'invention ;

– la figure 2 est une vue latérale avec arrachement partiel, vue du côté opposé à la figure 1, du même appareil ;

– la figure 3 est une vue partielle en bout, avec arrachement partiel, prise suivant la flèche III de la figure 2 ; et

– les figures 4 à 7 illustrent schématiquement plusieurs modes de réalisation des moyens d'excitation associés au guide.

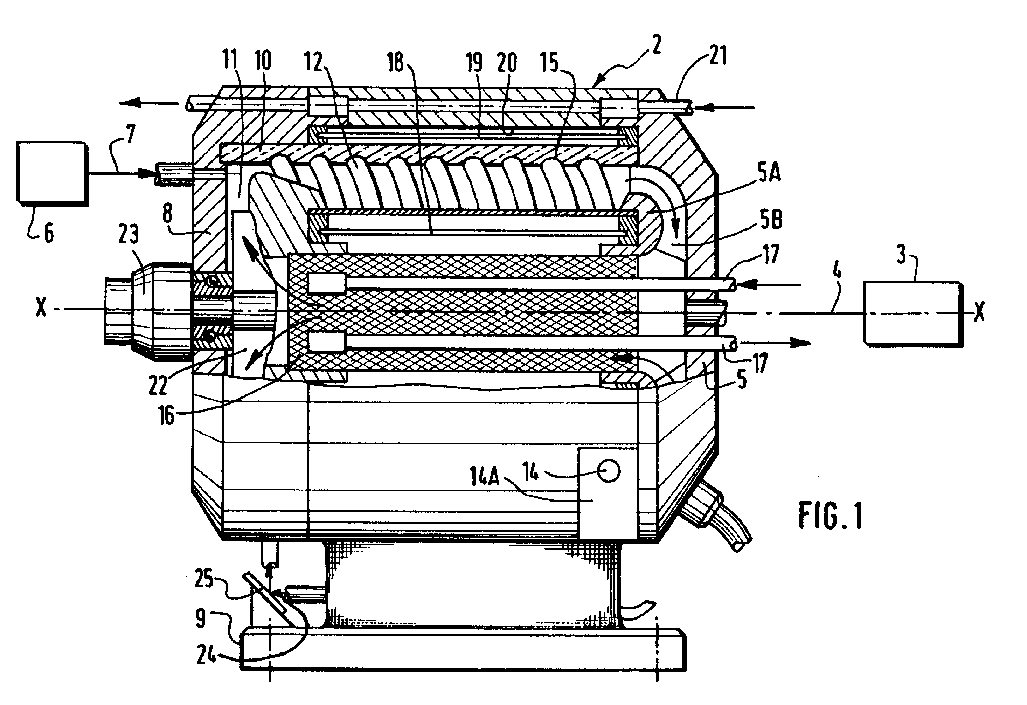

L'appareil représenté aux figures 1 à 3 est destiné à servir d'amplificateur à un laser 1 de faible puissance (par exemple de quelques dizaines de watts). Il comprend une enceinte d'amplification 2 de forme générale cylindrique, d'axe X-X horizontal, qui est relié d'une part à une pompe à vide 3 par une conduite 4 partant d'une paroi d'extrémité 5, d'autre part à une source de gaz lasant 6 par une conduite 7 partant le l'autre paroi d'extrémité 8 de l'enceinte. Le gaz lasant est par exemple un mélange d' hélium, d'azote et de

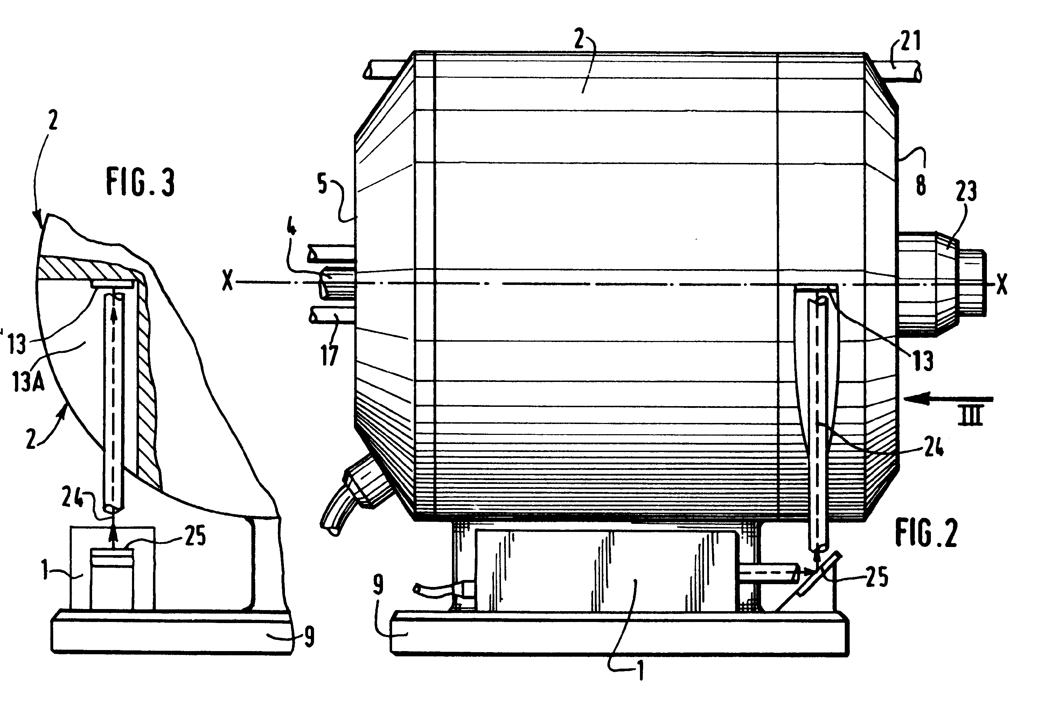

$CO_2$ et peut contenir également de l'hydrogène, du monoxyde de carbone, de l'oxygène et/ou du xénon. L'enceinte 2 est montée sur un socle 9 qui porte également le laser 1 (figure 2).

Un bloc annulaire 10 est monté dans l'espace 11 délimité dans l'enceinte 2, contre la paroi cylindrique interne de celle-ci. Dans la face radialement interne de ce bloc est creusée une gorge hélicoïdale 12 dont une extrémité (à gauche sur la figure 1, à droite sur la figure 2) se trouve en regard d'une fenêtre d'entrée 13 (figure 2) et dont l'autre extrémité se trouve en regard d'une fenêtre de sortie 14 (figure 1) de l'enceinte 2. La fenêtre 13 se trouve dans le plan diamétral horizontal de l'enceinte 2, au fond d'une échancrure 13A de celle-ci (figure 2) ; de même, la fenêtre 14 se trouve dans le plan diamétral vertical de l'enceinte 2, au fond d'une échancrure 14A de celle-ci (figure 1). La section droite de la gorge 12 est en arc de cercle. Sa surface porte un revêtement protecteur et réfléchissant 15 analogue à ceux utilisés de façon classique pour les miroirs à réflection totale des lasers.

L'espace central délimité par le bloc 10 est partiellement occupé par un ensemble comportant un échangeur de chaleur 16, par exemple en treillis métallique muni de conduites 17 d'entrée, de circulation et de sortie d'un fluide de refroidissement, cet échangeur étant entouré par une électrode cylindrique 18 d'axe X-X. Ledit ensemble est supporté en porte à faux par une excroissance 5A de la paroi 5, reliée à cette dernière par des nervures radiales 5B. L'autre électrode 19 de l'appareil est également cylindrique d'axe X-X et est disposée dans un évidement 20 prévu dans la paroi cylindrique de l'enceinte 2 autour du bloc 10. Cette paroi cylindrique est également pourvue de conduits 21 d'entrée, de circulation et de sortie de fluide de refroidissement. Les électrodes 18 et 19 sont reliées à une source d'énergie appropriée (non représentée) qui peut être par exemple une source radio-fréquence ou micro-ondes.

La paroi frontale 8 est traversée à joint étanche par l'arbre d'un ventilateur centrifuge 22 intérieur à l'espace 11 et entraîné par un moteur 23 extérieur à l'enceinte 2.

En fonctionnement, la pompe à vide 3 et la source 6 maintiennent dans l'espace 11 une atmosphère de gaz lasant sous faible pression qui est mis en circulation par le ventilateur 22 suivant les flèches indiquées sur la figure 1, c'est-à-dire radialement vers l'extérieur à partir de ce ventilateur, le long de la paroi 8, puis longitudinalement le long du bloc 10, puis radialement vers l'intérieur le long de la paroi 5, puis axialement vers le ventilateur à travers l'échangeur de chaleur 16, qui en assure le refroidissement en même temps que celui de l'électrode 18. Les conduits 21 refroidissent l'électrode 19 et le bloc 10, lequel présente un surface d'échange thermique importante.

Le laser 1 émet parallèlement à l'axe X-X un faisceau laser 24 de faible puissance. Ce dernier est réfléchi verticalement par un miroir 25 à 45° monté sur le socle 9 et est ainsi dirigé vers la fenêtre d'entrée 13. Dans l'espace 11, ce faisceau aborde l'extrémité adjacente de la gorge 12 suivant une direction tangentielle, et cette gorge le guide par réflexion jusqu'à la fenêtre de sortie 14 suivant un trajet hélicoïdal à spires multiples. Au cours de ce trajet, la puissance du faisceau est progressivement amplifiée par l'excitation produite par les deux électrodes coaxiales 18 et 19.

L'appareil ainsi décrit fournit sous un faible encombrement un trajet d'amplification de grande longueur et permet de faire sortir par la fenêtre 14 un faisceau laser de puissance considérablement augmentée par rapport au faisceau initial 25, par exemple de l'ordre du kilowatt.

Dans une variante non représentée constituant un cas limite, la gorge 12 peut avoir une profondeur et une courbure nulles, le faisceau laser étant alors guidé par une surface cylindrique lisse.

Le même appareil peut constituer lui-même un laser. Dans ce cas, le laser 1 est supprimé et la fenêtre d'entrée est remplacée par un miroir totalement réfléchissant tandis que la fenêtre de sortie est constituée par un miroir partiellement réfléchissant, de façon à constituer une cavité résonante comme il est classique dans la technique des lasers.

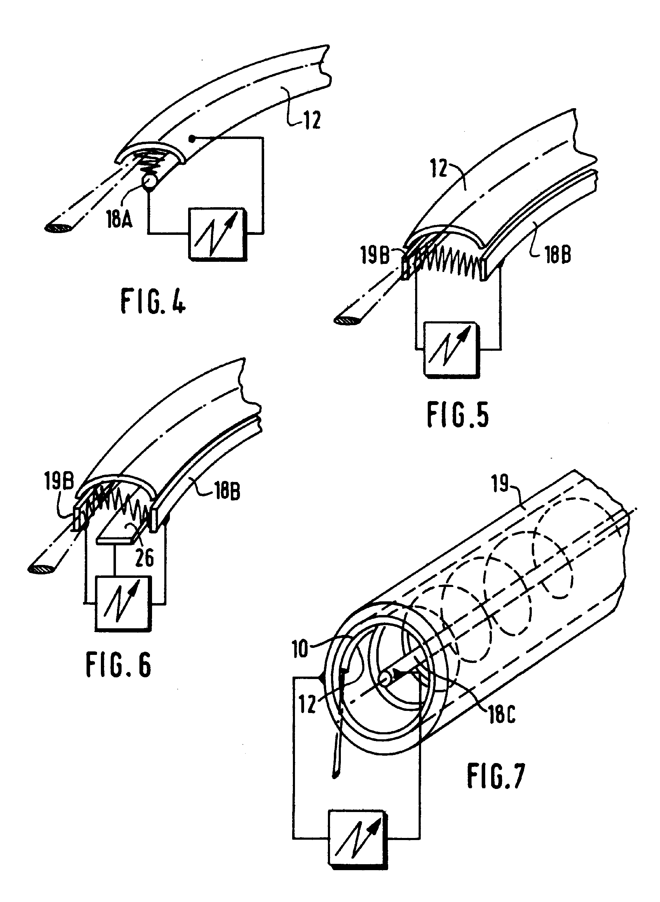

Les figures 4 à 7 montrent d'autres manières d'exciter le faisceau véhiculé par le guide 12.

A la figure 4, un conducteur hélicoïdal 18A remplaçant l'électrode intérieure 18 suit le guide 12, à peu près dans l'axe de la section droite de ce dernier. L'autre électrode suit un trajet parallèle à l'extérieur du guide et peut être constituée par le guide lui-même, comme représenté.

A la figure 5, les deux électrodes 18B et 19B longent les bords du guide 12. A la figure 6, une électrode supplémentaire de déflection 26, également hélicoïdale, est prévue entre les électrodes 18B et 19B et sert à confiner la décharge d'excitation dans la gorge définie par le guide.

Dans la variante de la figure 7, on retrouve l'électrode annulaire extérieure 19 de la figure 1, mais l'électrode intérieure est constituée par un conducteur axial 18C.

## Revendications

1. Appareil pour délivrer un faisceau laser, du type comprenant un milieu gazeux d'amplification et des moyens (18,19 ; 12,18A ; 18B,19B,26) d'excitation de ce milieu, caractérisé en ce que le milieu d'amplification est délimité par un guide réfléchissant (12) qui définit un trajet continûment courbe de guidage du faisceau laser, ce faisceau laser suivant une pluralité de spires.

2. Appareil suivant la revendication 1, caractérisé en ce que le guide (12) est constitué par une gorge creusée dans un bloc - support (10) rigide.

3. Appareil suivant l'une des revendications 1 et 2, caractérisé en ce que le guide (12) a une section droite concave.

4. Appareil suivant la revendication 1, caractérisé en ce que le guide est constitué par la surface interne lisse d'un élément cylindrique.

5. Appareil suivant l'une quelconque des revendications 1 à 4, caractérisé en ce que ledit trajet est hélicoïdal.

6. Appareil suivant l'une quelconque des revendications 1 à 5, caractérisé en ce que les moyens d'excitation comprennent deux électrodes (12, 18A ; 18B, 19B) longeant ledit trajet, l'une des deux électrodes pouvant être constituée par le guide (12) lui-même.

7. Appareil suivant la revendication 6, caractérisé en ce que les moyens d'excitation comprennent une troisième électrode (26) déflectrice longeant ledit trajet.

8. Appareil suivant la revendication 5, caractérisé en ce que les moyens d'excitation comprennent une électrode cylindrique (19) entourant le guide (12) et une électrode axiale (18C) ou cylindrique (18) disposée dans l'espace central délimité par le guide (12).

9. Appareil suivant la revendication 5, caractérisé en ce qu'un dispositif de refroidissement du gaz (16, 17) est logé dans l'espace central délimité par le guide (12).

10. Appareil suivant l'une quelconque des revendications 1 à 9, caractérisé en ce qu'il comprend une cavité résonante contenant le milieu d'amplification, l'appareil constituant ainsi un laser.

11. Appareil suivant l'une quelconque des revendications 1 à 9, caractérisé en ce qu'il comporte des moyens (1, 25) pour diriger un faisceau laser sur une extrémité dudit trajet, l'appareil constituant ainsi un amplificateur de faisceau laser.

## Patentansprüche

1. Vorrichtung zum Abgeben eines Laserstrahls von dem Typ, der ein gasförmiges Verstärkungsmedium aufweist sowie Mittel (18, 19; 12, 18A; 18B, 19B, 26) zum Anregen des Mediums, dadurch gekennzeichnet, daß das Verstärkungsmedium durch eine reflektierende Führung (12) begrenzt ist, die eine Bahn definiert, welche eine kontinuierliche Führungskurve für den Laserstrahl bildet, wobei der Laserstrahl einer Mehrzahl von Windungen folgt.

2. Vorrichtung nach Anspruch 1, dadurch gekennzeichnet, daß die Führung (12) durch eine Vertiefung gebildet ist, die aus einem Block bzw. einem starren Träger (10) ausgehöhlt bzw. ausgebohrt ist.

3. Vorrichtung nach einem der Ansprüche 1 oder 2, dadurch gekennzeichnet, daß die Führung (12) in einem geraden Schnitt konkav ist.

4. Vorrichtung nach Anspruch 1, dadurch gekennzeichnet, daß die Führung aus einer glatten inneren Fläche eines zylindrischen Elementes gebildet wird.

5. Vorrichtung nach einem der Ansprüche 1 bis 4, dadurch gekennzeichnet, daß die Bahn spiralförmig ist.

6. Vorrichtung nach einem der Ansprüche 1 bis 5, dadurch gekennzeichnet, daß die Mittel zum Anregen zwei Elektroden (12, 18A; 18B, 19B) entlang der Bahn aufweisen, wobei eine der beiden Elektroden aus der Führung (12) selbst gebildet werden kann.

7. Vorrichtung nach Anspruch 6, dadurch gekennzeichnet, daß die Mittel zum Anregen eine dritte, ablenkende Elektrode (26) entlang der Bahn aufweisen.

8. Vorrichtung nach Anspruch 5, dadurch gekennzeichnet, daß die Mittel zum Anregen eine zylindrische Elektrode (19) aufweisen, welche die Führung (12) umgibt, sowie eine axiale (18C) oder zylindrische (18) Elektrode, welche in dem zentralen Raum angeordnet ist, der von der Führung (12) begrenzt wird.

9. Vorrichtung nach Anspruch 5, dadurch gekennzeichnet, daß eine Gaskühleinrichtung (16, 17) in dem zentralen Raum untergebracht ist, der von der Führung (12) begrenzt wird.

10. Vorrichtung nach einem der Ansprüche 1 bis 9, dadurch gekennzeichnet, daß sie eine Resonanzvertiefung bzw. einen Resonanzhohlraum aufweist, der das Verstärkungsmedium enthält, so daß die Vorrichtung einen Laser darstellt.

11. Vorrichtung nach einem der Ansprüche 1 bis 9, dadurch gekennzeichnet, daß sie ein Mittel (1, 25) zum Lenken des Laserstrahls zu einem Ende der Bahn enthält, so daß die Vorrichtung einen Verstärker für den Laserstrahl bildet.

## Claims

1. Apparatus for delivering a laser beam, of the type comprising a gaseous amplification medium and means (18,19 ; 12,18A ; 18B,19B,26) for exciting this medium, characterised in that the amplification medium is delimited by a reflecting guide (12) which defines a continuously curved guiding trajectory of the laser beam, said laser beam following a plurality of turns.

2. Apparatus according to claim 1, characterised in that the guide (12) consists of a groove hollowed out in a rigid supporting block (10).

3. Apparatus according to one of claims 1 and 2, characterised in that the guide (12) has a concave cross-section.

4. Apparatus according to claim 1, characterised In that the guide consists of the smooth Internal surface of a cylindrical element.

5. Apparatus according to any one of claims 1 to 4, characterised in that said trajectory is helicoidal.

6. Apparatus according to any one of claims 1 to 5, characterised in that the means of excitation comprise two electrodes (12, 18A ; 18B, 19B) extending along said trajectory, with it being possible for one of the two electrodes to be formed by the guide (12) itself.

7. Apparatus according to claim 6, characterised in that the means of excitation comprise a third deflecting electrode (26) extending along said trajectory.

8. Apparatus according to claim 5, characterised in that the means of excitation comprise a cylindrical electrode (19) surrounding the guide (12) and an axial electrode (18C) or cylindrical electrode (18) disposed in the central space delimited by the guide (12).

9. Apparatus according to claim 5, characterised in that a device for cooling the gas (16, 17) is accommodated in the central space delimited by the guide (12).

10. Apparatus according to any one of claims 1 to 9, characterised in that it comprises a resonating cavity containing the amplification medium, the apparatus thus constituting a laser.

11. Apparatus according to any one of claims 1 to 9, characterised in that it comprises means (1, 25) to direct a laser beam on an extremity of said trajectory, the apparatus thus constituting a laser beam amplifier.

FIG. 1

FIG.2

FIG.3

FIG.4

FIG.5

FIG.6

FIG.7